# EUROPEAN PATENT APPLICATION

(11) **EP 4 148 426 A1**
(43) Date of publication of application: **15.03.2023**
(21) Application number: 22194624.7
(22) Date of filing: 08.09.2022
(51) Int. Cl.: G01N 30/44

(54) **CHECK STANDARD RECYCLE SETUP FOR ION CHROMATOGRAPHY**

(30) Priority: 09.09.2021 US 202117471032
(71) Applicant: Dionex Corporation, Sunnyvale, CA 94085 (US)
(72) Inventor: Srinivasan, Kannan, Tracy, 95377 (US)
(74) Representative: Boult Wade Tennant LLP

(57) **Abstract**

An ion chromatography system includes a separation column 112 configured to separate components of a solution; a non-destructive detector 116; and a concentrator 144 configured to capture components of a check standard after they leave the conductivity non-destructive detector; and release the components of the check standard to the separation column.

## Description

### FIELD

The present disclosure generally relates to the field of ion chromatography including a check standard recycle setup.

### INTRODUCTION

Ion chromatography (IC) is a widely used analytical technique for the determination of anionic and cationic analytes in various sample matrices. Check standards are normally used in chromatography for verifying that the calibration and the quantification protocols are valid and useful to quantitate the unknown analyte peaks of interest. The check standards are prepared on a frequent basis and injected based on established protocols. Typically, the standard is injected on a daily basis to validate the system performance before injecting unknown analyte containing samples. The standard usually includes known concentrations of a variety of analytes of interest. Usually the individual analyte concentrations are different and tuned to address the application requirements. For example, when analyzing for chloride in drinking water the concentration is in the mg/L or ppm regime whereas when analyzing for trace constituents such as bromate or perchlorate the concentration is lower in the µg/L or ppb regime. Preparing these standards on a frequent basis can be cumbersome and error prone.

### SUMMARY

In a first aspect, an ion chromatography system can include a separation column configured to separate components of a solution; a non-destructive detector; and a concentrator configured to capture components of a check standard after they leave the non-destructive detector; and release the components of the check standard to the separation column.

In various embodiments of the first aspect, the ion chromatography system can further include an electrolytic suppressor configured to exchange eluent counter ions for regenerant ions.

In various embodiments of the first aspect, the non-destructive detector can be a conductivity detector, a ultraviolet-visible detector, a fluorescence detector, a refractive index detector, a radio flow detector, a chiral detector, an electrochemical detector, or any combination thereof.

In various embodiments of the first aspect, the ion chromatography system can further include an eluent generator.

In various embodiments of the first aspect, the ion chromatography system can further include a continuously regenerated trap column.

In various embodiments of the first aspect, the ion chromatography system can further include a degasser.

In various embodiments of the first aspect, the ion chromatography system can further include a multiport valve that in a first configuration directs an output of the detector to a concentrator and an output of the concentrator to a regenerant channel of the electrolytic suppressor or to waste and in a second configuration direct a flow of eluent to the input of the concentrator and the output of the concentrator to the separation column. In particular embodiments, the ion chromatography system can further include a valve that in a first configuration can direct the output of the detector to the multiport valve and in a second configuration can direct the output of the detector to the regenerant channel of the electrolytic suppressor. In particular embodiments, the concentrator can further include an inlet electrode and an outlet electrode; the inlet electrode and outlet electrode can be configured to apply a potential across the concentrator to drive the check standard from the concentrator.

In a second aspect, a method of reusing a check standard including separating the components of the check standard using a separation column; detecting the components of the check standard using a non-destructive detector to obtain a first chromatographic data set; capturing the components of the check standard with a concentrator; and releasing the check standard from the concentrator to the separation column to repeat the separating, suppressing, and detecting steps to obtain a second chromatographic data set.

In various embodiments of the second aspect, the method can further include suppressing the eluent of the separation columns using an electrolytic suppressor.

In various embodiments of the second aspect, the non-destructive detector can be a conductivity detector, a UV detector, a fluorescence detector, a refractive index detector, a radio flow detector, a chiral detector, an electrochemical detector, or any combination thereof.

In various embodiments of the second aspect, the method can further include comparing the first chromatographic data set to the second chromatographic data set to evaluate the performance of the separation column.

In various embodiments of the second aspect, the method can further include switching a valve to a first position where the output of the detector is directed to a multiport valve and switching the multiport valve to direct the output of the detector to the concentrator. In particular embodiments, the method can further include switching the valve to a second position where the output of the detector is directed to a regenerant channel of the electrolytic suppressor or waste. In particular embodiments, the method can further include switching the multiport valve to a second position where the output of the concentrator is directed to the separation column prior to the releasing step.

In various embodiments of the second aspect, releasing the check standard from the concentrator can include using an inlet electrode and an outlet electrode to apply a potential across the concentrator to drive the check standard from the concentrator.

In various embodiments of the second aspect, releasing the check standard from the concentrator can include flowing a solution through the concentrator to displace the check standard components from the concentrator.

In a third aspect, a method of monitoring the performance of an ion chromatography system, comprising: separating the components of the check standard on a separation column; detecting the components of the check standard using a non-destructive detector to obtain a first chromatographic data set; capturing the components of the check standard with a concentrator; and releasing the check standard from the concentrator to the separation column; repeating the separating, suppressing, and detecting steps to obtain a second chromatographic data set; comparing the first chromatographic data set to the second chromatographic data set to evaluate the performance of the separation column; providing a user with a status indicator of the state of the ion chromatography system.

In various embodiments of the third aspect, the method can further include suppressing the eluent of the separation columns.

In various embodiments of the third aspect, the non-destructive detector can be a conductivity detector, a UV detector, a fluorescence detector, a refractive index detector, a radio flow detector, a chiral detector, an electrochemical detector, or any combination thereof.

In various embodiments of the third aspect, the status indicator can indicate the separation column needs to be replaced.

In various embodiments of the third aspect, the method can further include comparing multiple chromatography data sets obtained over time to predict a remaining useful life of the separation column.

In various embodiments of the third aspect, releasing the check standard from the concentrator can include using an inlet electrode and an outlet electrode to apply a potential across the concentrator to drive the check standard from the concentrator.

In various embodiments of the third aspect, releasing the check standard from the concentrator can include flowing a solution through the concentrator to displace the check standard components from the concentrator.

### DRAWINGS

For a more complete understanding of the principles disclosed herein, and the advantages thereof, reference is now made to the following descriptions taken in conjunction with the accompanying drawings, in which:
Figures 1 and 2 illustrate exemplary chromatography systems, in accordance with various embodiments.
Figure 3 illustrates an exemplary method of recycling the check standard , in accordance with various embodiments.
Figure 4 illustrates an exemplary method monitoring system health using a recycled check standard, in accordance with various embodiments.

It is to be understood that the figures are not necessarily drawn to scale, nor are the objects in the figures necessarily drawn to scale in relationship to one another. The figures are depictions that are intended to bring clarity and understanding to various embodiments of apparatuses, systems, and methods disclosed herein. Wherever possible, the same reference numbers will be used throughout the drawings to refer to the same or like parts. Moreover, it should be appreciated that the drawings are not intended to limit the scope of the present teachings in any way.

### DESCRIPTION OF VARIOUS EMBODIMENTS

Embodiments of systems and methods for ion separation are described herein.

The section headings used herein are for organizational purposes only and are not to be construed as limiting the described subject matter in any way.

In this detailed description of the various embodiments, for purposes of explanation, numerous specific details are set forth to provide a thorough understanding of the embodiments disclosed. One skilled in the art will appreciate, however, that these various embodiments may be practiced with or without these specific details. In other instances, structures and devices are shown in block diagram form. Furthermore, one skilled in the art can readily appreciate that the specific sequences in which methods are presented and performed are illustrative and it is contemplated that the sequences can be varied and still remain within the spirit and scope of the various embodiments disclosed herein.

All literature and similar materials cited in this application, including but not limited to, patents, patent applications, articles, books, treatises, and internet web pages are expressly incorporated by reference in their entirety for any purpose. Unless described otherwise, all technical and scientific terms used herein have a meaning as is commonly understood by one of ordinary skill in the art to which the various embodiments described herein belongs.

It will be appreciated that there is an implied "about" prior to the temperatures, concentrations, times, pressures, flow rates, cross-sectional areas, etc. discussed in the present teachings, such that slight and insubstantial deviations are within the scope of the present teachings. In this application, the use of the singular includes the plural unless specifically stated otherwise. Also, the use of "comprise", "comprises", "comprising", "contain", "contains", "containing", "include", "includes", and "including" are not intended to be limiting. It is to be understood that both the foregoing general description and the following detailed description are exemplary and explanatory only and are not restrictive of the present teachings.

As used herein, "a" or "an" also may refer to "at least one" or "one or more." Also, the use of "or" is inclusive, such that the phrase "A or B" is true when "A" is true, "B" is true, or both "A" and "B" are true. Further, unless otherwise required by context, singular terms shall include pluralities and plural terms shall include the singular.

A "system" sets forth a set of components, real or abstract, comprising a whole where each component interacts with or is related to at least one other component within the whole.

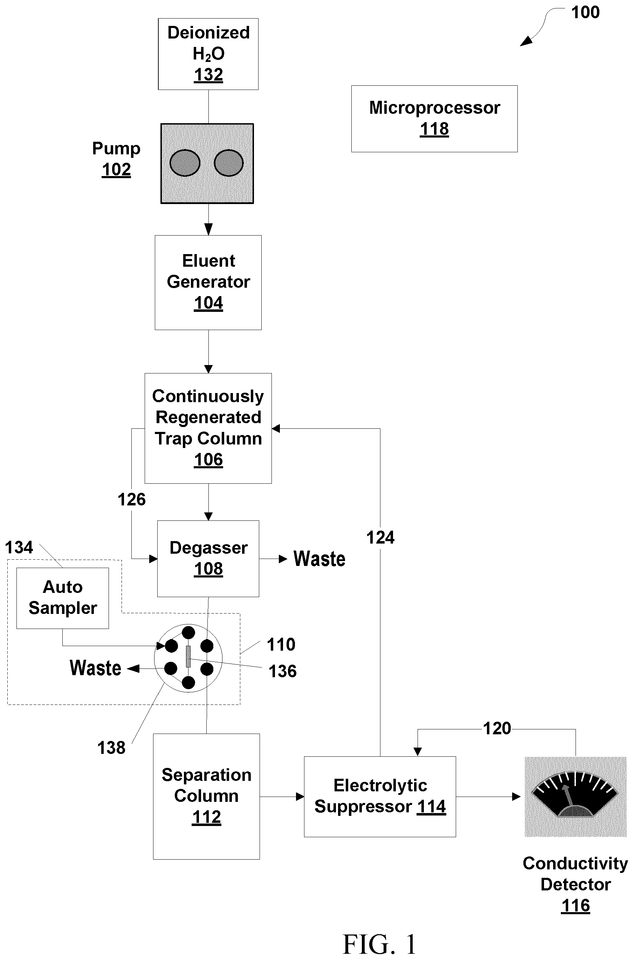

Figure 1 illustrates an embodiment of a chromatography system 100. Chromatography system 100 may include a pump 102, an electrolytic eluent generator 104, a continuously regenerated trap column 106, a degasser 108, a sample injector 110, a chromatographic separation device 112, an electrolytic suppressor 114, a detector 116, and a microprocessor 118. Chromatographic separation device 112 may be in the form of a capillary column or an analytical column. Line 120 may be used to transfer the liquid from an output of detector 116 to an inlet of the electrolytic suppressor 114. Line 124 may be used to transfer liquid from an outlet of the regenerant channel of the electrolytic suppressor 114 to an inlet of the continuously regenerated trap column 106. Recycle line 126 can be used to transfer liquid from an outlet of the continuously regenerated trap column 106 to an inlet of the degasser 108. Liquid from the outlet of the degasser 108 can be directed to waste 128.

Pump 102 can be configured to pump a liquid from a liquid source 132, such as deionized water, and be fluidically connected to electrolytic eluent generator 104. Pump 102 can be configured to transport the liquid at a pressure ranging from about 20 PSI to about 15,000 PSI. Under certain circumstances, pressures greater than 15,000 PSI may also be implemented. It should be noted that the pressures denoted herein are listed relative to an ambient pressure (13.7 PSI to 15.2 PSI). Pump 102 may be in the form of a high-pressure liquid chromatography (HPLC) pump. In addition, pump 102 can also be configured so that the liquid only touches an inert portion of pump 102 so that a significant amount of impurities does not leach out. In this context, significant means an amount of impurities that would interfere with the intended measurement. For example, the inert portion can be made of polyether ether ketone (PEEK) or at least coated with a PEEK lining, which does not leach out a significant amount of ions when exposed to a liquid.

An eluent is a liquid that contains an acid, base, salt, or mixture thereof and can be used to elute an analyte through a chromatography column. In addition, an eluent can include a mixture of a liquid and a water miscible organic solvent, where the liquid may include an acid, base, salt, or combination thereof. Electrolytic eluent generator 104 is configured to generate a generant. A generant refers to a particular species of acid, base, or salt that can be added to the eluent. In an embodiment, the generant may be a base such as cation hydroxide or the generant may be an acid such as carbonic acid, phosphoric acid, acetic acid, methanesulfonic acid, or a combination thereof.

Referring to Figure 1, eluent generator 104 can be configured to receive the liquid from pump 102 and then add a generant to the liquid. The liquid containing the generant can be outputted from eluent generator 104 to an inlet of continuously regenerated trap column 106.

Continuously regenerated trap column 106 is configured to remove cationic or anionic contaminants from the eluent. Continuously regenerated trap column 106 can include an ion exchange bed with an electrode at the eluent outlet. An ion exchange membrane stack can separate the eluent from a second electrode and contaminate ions can be swept through the ion exchange membrane stack towards the second electrode. The ion exchange membrane stack can include one or more ion exchange membranes. In various embodiments, anion removal can utilize an anion exchange bed with a cathode at the eluent outlet separated from an anode by an anion exchange membrane. Alternatively, cation removal can utilize a cation exchange bed with an anode at the eluent outlet separated from a cathode by a cation exchange membrane.

Degasser 108 may be used to remove residual gas. In an embodiment, a residual gas may be electrolytically generated such as hydrogen and oxygen. Degasser 108 may include a tubing section that is gas permeable and liquid impermeable such as, for example, amorphous fluoropolymers or more specifically Teflon AF. The flowing liquid can be outputted from degasser 108 to sample injector 110 with a substantial portion of the gas removed.

Sample Injector 110 can be used to inject a bolus of a liquid sample into an eluent stream. The liquid sample may include a plurality of chemical constituents (i.e., matrix components) and one or more analytes of interest. The sample injector 110 can include an auto sampler 134, sample loop 136, and a multiport valve 138. The auto sampler 134 can draw a sample from a sample container. The multiport valve 138 can be in a first position to allow the sample to fill the sample loop 136. After the sample loop 136 is filled to the desired level, the multiport valve can switch to a second position and the eluent stream can drive the sample onto the chromatographic separation device 112.

Chromatographic separation device 112 can be used to separate various matrix components present in the liquid sample from the analyte(s) of interest. Typically, chromatographic separation device 112 may be in the form of a hollow cylinder that contains a packed stationary phase. As the liquid sample flows through chromatographic separation device 112, the matrix components and target analytes can have a range of retention times for eluting off of chromatographic separation device 112. Depending on the characteristics of the target analytes and matrix components, they can have different affinities to the stationary phase in chromatographic separation device 112. An output of chromatographic separation device 112 can be fluidically connected to electrolytic suppressor 114.

Suppressor 114 can be used to reduce eluent conductivity background and enhance analyte response through efficient exchange of eluent counterions for regenerant ions. One type of suppressor is an electrolytic suppressor 114 can include an anode chamber, a cathode chamber, and an eluent suppression bed chamber separated by ion exchange membranes. The anode chamber and/or cathode chamber can produce regenerate ions or transport supplied regenerant ions. The eluent suppression bed chamber can include a flow path for the eluent separated from the regenerant by an ion exchange barrier and eluent counterions can be exchanged with regenerate ions across the ion exchange barrier. An output of electrolytic suppressor 114 can be fluidically connected to detector 116 to measure the presence of the separated chemical constituents of the liquid sample. The suppressor 114 can also be of the chemical kind that requires a chemical regenerant for operation. Any suppressor in the prior art is suited for the present application with multiple channels as configured.

Detector 116 may be in the form of ultraviolet-visible spectrometer, a fluorescence spectrometer, , a refractive index detector, a radio flow detector, a chiral detector, an electrochemical detector, a conductivity detector, or a combination thereof. The detector 116 is preferably a non-destructive detector that preserves substantially the eluent stream from the suppressor eluent output.

An electronic circuit may include microprocessor 118, a timer, and a memory portion. In addition, the electronic circuit may include a power supply that are configured to apply a controlling signal, respectively. Microprocessor 118 can be used to control the operation of chromatography system 100. Microprocessor 118 may either be integrated into chromatography system 100 or be part of a personal computer that communicates with chromatography system 100. Microprocessor 118 may be configured to communicate with and control one or more components of chromatography system such as pump 102, pump 130, eluent generator 104, sample injector 110, and detector 116. The memory portion may be used to store instructions to set the magnitude and timing of the current waveform with respect to the switching of sample injector 110 that injects the sample.

Standard preparation for ion chromatography can be problematic from an error perspective. The errors can stem from user skill level and the implementation aspects such as tools used and due to contamination introduced during the standard preparation process etc. One work around to these issues is to buy standards of known concentrations and dilute this to known concentration levels. This approach is also error prone from the dilution processes. Automated instrumentation can be used to prepare standards at known dilution levels but the approach is expensive and requires additional automated pipettes/syringes and instrumentation and added costs.

The systems and methods disclosed herein solve the issues related to frequent preparation of the check standard by providing a means of retaining the analytes of interest after analysis and storing it in an ion exchange media for future use. The solution leverages the suppressor reaction that results in a conversion of the eluent to a weakly dissociated form and retention of the separated analytes can occur on an ion exchange column in a weakly dissociated suppressed eluent stream. The retained analytes are retained in the ion exchange column as a mixture of standards and can be eluted off the column in a future run. The analyte concentrations can be preserved by and the user does not have to prepare the standards on a frequent basis. The setup for the implementation can be fully automated. In another embodiment the setup is useful as a diagnostic tool to test the system instrumentation and consumable performance by generating a test chromatogram based on the retained check standard and comparing the chromatographic performance with previously stored chromatogram.

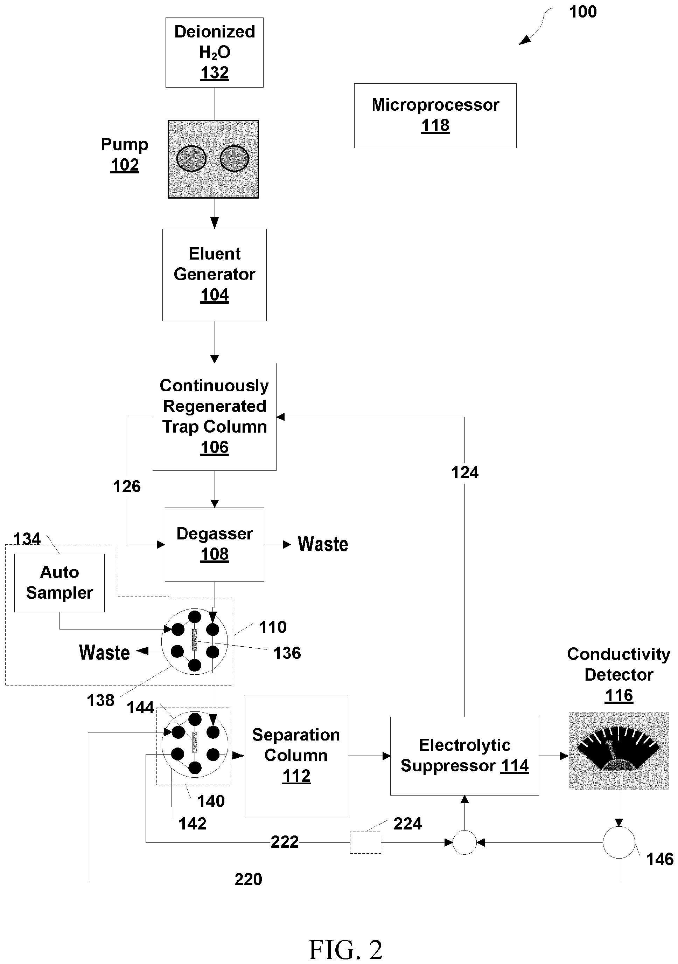

Figure 2 illustrates an embodiment of a chromatography system 200 with check standard recycling. Chromatography system 200 includes many similar elements to chromatography system 100, include a pump 102, an electrolytic eluent generator 104, a continuously regenerated trap column 106, a degasser 108, a sample injector 110, a chromatographic separation device 112, an electrolytic suppressor 114, a detector 116, and a microprocessor 118. Chromatography system 200 can further includes a check standard recycler 140. The check standard recycler 140 can include a multiport valve 142 and a concentrator 144. The concentrator can include a concentrator column packed with ion exchange resins, an ion exchange monolith, an ion exchange membrane and the like and combinations thereof. Additionally, while a single concentrator can be used, one could appreciate that multiple concentrator columns can be employed with suitable valving to concentrate the separated analytes of interest in specific columns. Thus, selective capture of the components from the separation column is feasible.

Chromatography system 200 leverages the suppression process and concentrates the analytes of interest in the ion exchange media of concentrator 144. For example, during anion analysis with potassium hydroxide as the eluent, the suppression process converts the eluent to water. The analytes are converted to the acid forms and elute in water background after suppression and are detected using a non-destructive detector. This background provides the ideal environment for capturing the analytes of interest back into a concentrator column.

After separation by separation column 112 and suppression by electrolytic suppressor 114, the components of the check standard can be directed to the detector. From the detector, the check standard analytes can be directed, by line 220 to the check standard recycler 140 where the analytes can be captured and concentrated by concentrator 144. The flow coming out of the concentrator 144 can be directed back to the suppressor through line 222 to provide water required for the electrolysis reactions. An optional check valve 224 can be included in line 222 to prevent any flow from the detector cell to the concentrator column.

In other embodiments that operate the suppressor in the external water mode or chemical regeneration mode the flow coming out of the concentrator 144 can be directed to waste.

Once the check standard is run and the instrument is validated based on the performance with the check standard, a sample of interest can be injected. It can be preferable to bypass the concentrator 144 post detector so that the retained standard ions remain bound as a counter ion to the ion exchange substrate. This can be accomplished by valve 146 which redirected the flow from the detector 116 to the suppressor 114. Junction 148 can merge the flow paths from concentrator 144 and valve 146 prior to suppressor 114.

At a future state when a check standard needs to be run, the concentrator 144 can be brought inline and the ions are eluted off the column and routed to the ion exchange column for separation. Thus, an automated repository of ions is available by and a self-sustained source of check standard is preserved.

In various embodiments, concentrator 144 can be fitted with inlet and outlet electrodes. Application of a potential across the inlet and outlet electrodes can be used to drive the concentrated analytes out of concentrator 144. The direction of the polarity can be used to ensure that the analyte is retained and eluted off the column. For example, when pursuing anion analysis it is preferred that the concentrator column be packed with anion exchange materials and that the cathode be at the outlet of the column during concentration this way the anions will be attracted to the anode which is in the inlet of the column and the flow is directed from the inlet to the outlet. During elution the flow direction can be reversed and the analytes can be eluted off the column in the acid form. The outlet polarity relative to the flow is anode and the inlet polarity is a cathode. The anions pick up electrolysis derived hydronium ions and exit the column as an acid plug and are routed to the analytical column for analysis. During elution, the flow can comprise of deionized water or a low eluent strength eluent. This approach facilitates application of a steeper gradient during separations.

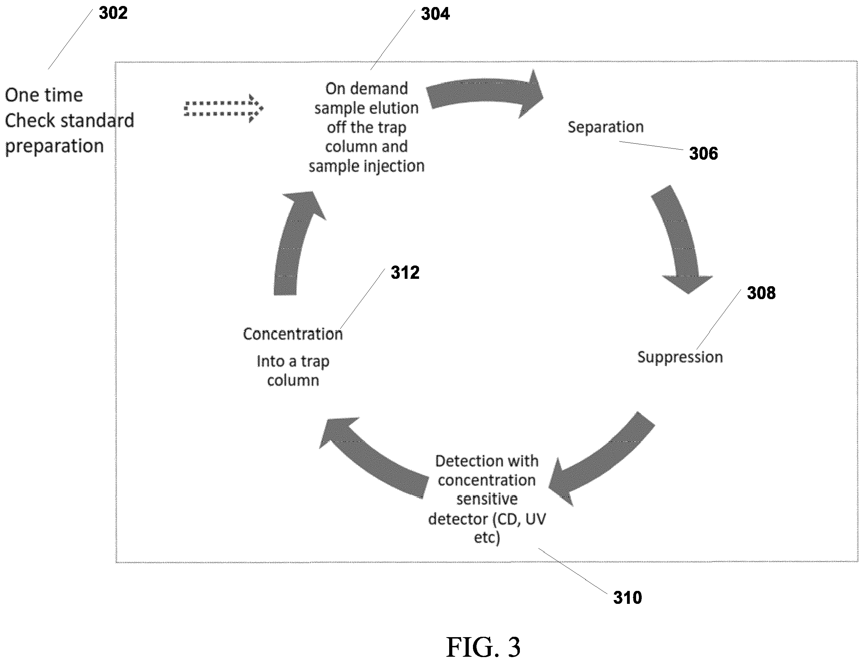

Figure 3 shows the general schematic of method. A standard with known analytes is prepared at 302 and injected into the ion chromatograph at 304. The analytes are separated at 306, the eluent is suppressed at 308 and then analytes are detected at 310 as presently pursued in ion chromatography. A non-destructive detector is preferred since the goal is to preserve the analyte ions of interest after detection. The detected analyte ions from the check standard run are routed into a concentrator column at 312 where the analyte ions of interest are retained irreversibly in the weakly dissociated suppressed eluent environment. The concentrator column can be put inline when the analyte ions need to be eluted as a standard injection as a check standard at 304. Thus, recycling of the analyte ions as a standard is feasible by the present invention. In practice, the retained standards can be replaced with fresh standards periodically, such as when there is intrusion of carbonate ion into the ion chromatograph that causes changes to the carbonate levels in the retained standards. The replacement cycle can be several months as per the present invention and a facile means of preserving the standard is available based on the present invention. A comparison of the standard performance to previously run chromatograms will aid diagnostic support as per the present invention. Replacement of the standards can include eluting the retained standard ions while directing the flow from the detector to the suppressor rather than to the check standard recycler 140. Subsequently, a new check standard can be injected into the system and the flow from the detector can be directed to the check standard recycler 140 to capture the analyte ions of the fresh standard. In the above discussion we are assuming the standards are anions. The same concept can be applied for applications with cation standards when pursuing cation analysis.

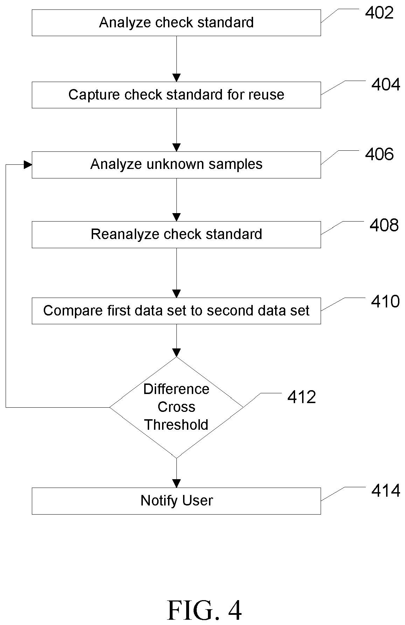

Figure 4 illustrates a method of monitoring the health of the chromatography system, such as chromatography system 200. At 402, a check standard can be analyzed and a first set of data from the detector collected. At 404, the check standard can be captured and concentrated for reuse. At 406, the chromatography system can be used to analyze unknown samples. At 408, the check standard can be eluted from the check standard concentrator and be reanalyzed and a second set of data from the detector can be collected. At 410, the second set of data can be compared to the first set of data. The comparison can look for changes between the first data set and the second data set such as peak height, peak area, peak shape, retention time, background levels, and the like which may be indicative of the need for system maintenance. At 412, if the difference between the first data set and the second data set crosses a threshold, a user can be notified at 414. In various embodiments, the notification can include recommendations for system maintenance. When the difference does not cross a threshold, the method may return to 406 and the system can continue to be used to analyze samples. Thus, a smart ecosystem is created by the disclosed systems and method and the system can operate in a fully automated fashion without user intervention. In various embodiments, trends in the data can be recorded and used as an indicator for future system maintenance.

## Claims

1. An ion chromatography system comprising:
a separation column configured to separate components of a solution;
a non-destructive detector; and
a concentrator configured to
capture components of a check standard after they leave the non-destructive detector; and
release the components of the check standard to the separation column.

2. The ion chromatography system of claim 1 further comprising an electrolytic suppressor configured to exchange eluent counter ions for regenerant ions.

3. The ion chromatography system of claim 1 or claim 2, wherein the non-destructive detector is a conductivity detector, a ultraviolet-visible detector, a fluorescence detector, a refractive index detector, a radio flow detector, a chiral detector, an electrochemical detector, or any combination thereof.

4. The ion chromatography system of claim 1, claim 2 or claim 3, further comprising an eluent generator.

5. The ion chromatography system of any preceding claim, further comprising a continuously regenerated trap column or degasser.

6. The ion chromatography system of any preceding claim, further comprising a multiport valve that in a first configuration directs an output of the detector to a concentrator and an output of the concentrator to a regenerant channel of the electrolytic suppressor or to waste and in a second configuration directs a flow of eluent to the input of the concentrator and the output of the concentrator to the separation column.

7. The ion chromatography system of claim 6, further comprising a valve that in a first configuration direct the output of the detector to the multiport valve and in a second configuration directs the output of the detector to the regenerant channel of the electrolytic suppressor.

8. The ion chromatography system of claim 6, wherein the concentrator further includes an inlet electrode and an outlet electrode; the inlet electrode and outlet electrode configured to apply a potential across the concentrator to drive the check standard from the concentrator.

9. A method of reusing a check standard comprising:
separating the components of the check standard using a separation column;
detecting the components of the check standard using a non-destructive detector to obtain a first chromatographic data set;
capturing the components of the check standard with a concentrator; and
releasing the check standard from the concentrator to the separation column to repeat the separating, suppressing, and detecting steps to obtain a second chromatographic data set.

10. The method of claim 9 further comprising suppressing the eluent of the separation columns.

11. The method of claim 10, wherein the step of suppressing the eluent of the separation columns employs an electrolytic suppressor.

12. The method of claim9, claim 10 or claim 11, wherein the non-destructive detector is a conductivity detector, a UV detector, a fluorescence detector, a refractive index detector, a radio flow detector, a chiral detector, an electrochemical detector, or any combination thereof.

13. The method of any of claims 9-12 further comprising switching a valve to a first position where the output of the detector is directed to a multiport valve and switching the multiport valve to direct the output of the detector to the concentrator.

14. The method of claim 13 further comprising switching the valve to a second position where the output of the detector is directed to a regenerant channel of the electrolytic suppressor or waste.

15. The method of claim 13 further comprising switching the multiport valve to a second position where the output of the concentrator is directed to the separation column prior to the releasing step.

16. The method of any one of claims 9-15 wherein releasing the check standard from the concentrator includes using an inlet electrode and an outlet electrode to apply a potential across the concentrator to drive the check standard from the concentrator.

17. The method of any one of claims 9-15 wherein releasing the check standard from the concentrator includes flowing a solution through the concentrator to displace the check standard components from the concentrator.

18. The method of any of claims 9-17 further comprising comparing the first chromatographic data set to the second chromatographic data set to evaluate the performance of the separation column.

19. The method of claim 18, further comprising:
providing a user with a status indicator of the state of the ion chromatography system.

20. The method of claim 19 wherein the status indicator indicates the separation column needs to be replaced.

21. The method of claim 19 or claim 20, further comprising comparing multiple chromatography data sets obtained over time to predict a remaining useful life of the separation column.
